Europäisches Patentamt

European Patent Office

Office européen des brevets

(19)

(11) Publication number: **0 120 103**
**A1**

## (12) EUROPEAN PATENT APPLICATION

(21) Application number: **83102882.4**

(22) Date of filing: **23.03.83**

(51) Int. Cl.³: **H 02 H 11/00**
**H 01 F 29/04, H 03 K 17/18**

(43) Date of publication of application:
**03.10.84 Bulletin 84/40**

(84) Designated Contracting States:
**AT BE CH DE FR GB IT LI NL SE**

(71) Applicant: **Yamabishi Electric Co., Ltd.**
**Higashi 3 gokan Takahashi Biru 3-3, Tenginbashi**
**3-chome**
**Kita-ku Osaka-shi Osaka(JP)**

(72) Inventor: **Sekine, Norio**
**3-14, Kiyosu 2-chome**
**Kashihara-shi Nara(JP)**

(74) Representative: **Glawe, Delfs, Moll & Partner**
**Patentanwälte**
**Postfach 26 01 62 Liebherrstrasse 20**
**D-8000 München 26(DE)**

(54) Circuit for preventing two or more ac switches from conducting simultaneously.

(57) A circuit is proposed which prevents a simultaneous conduction of two or more AC switches ($2_1$, $2_2$, $2_3$). It includes control circuits ($14_1$, $14_2$, $14_3$) for giving the AC switches ($2_1$, $2_2$, $2_3$) a control signal ($b_1$, $b_2$, $b_3$) to turn them on and detection circuits ($10_1$, $10_2$, $10_3$) for detecting the voltages across the control terminals of the AC switches ($2_1$, $2_2$, $2_3$), said control circuits ($14_1$, $14_2$, $14_3$) each having a circuit ($15_1$, $15_2$, $15_3$) for cancelling the control signals for the other AC switches when one of said detection circuits ($10_1$, $10_2$, $10_3$) has detected that the respective AC switch ($2_n$) is on.

FIG. 3

CIRCUIT FOR PREVENTING TWO OR MORE AC

SWITCHES FROM CONDUCTING SIMULTANEOUSLY


The present invention relates to a circuit for preventing two or more AC switches from turning on simultaneously in a circuitry including a plurality of AC switches.

AC switches such as reverse blocking triode thyristors (SCR) and bidirectional triode thyristors (Triac, trademark) have heretofore been prevented from conducting simutaneously by controlling them by means of a gate signal. However, if the load contains a reactor component or a capacitor component, this method using a gate signal synchronized with the frequency of input voltage (or generated on zero crossing of input voltage) to turn on the AC switches has a problem that two or more AC switches can conduct simultaneously because the load current is not in phase with the input voltage. Synchronizing the gate signal with the frequency of the input voltage is to avoid noise upon firing of the AC switch.

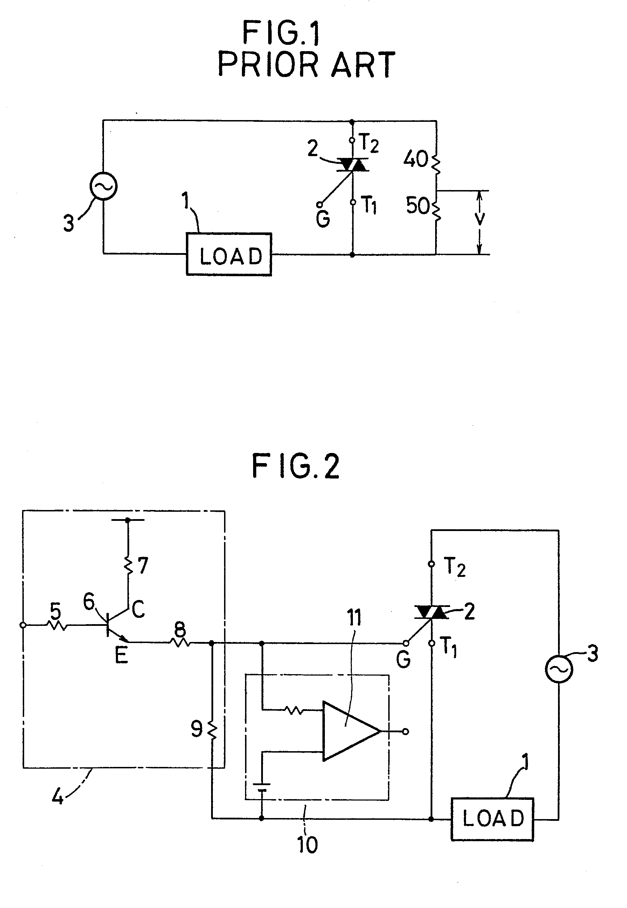

In order to solve the above-mentioned problem, a circuit as shown in Fig. 1 has been proposed in which a load 1 and a Triac 2 are connected in series with an AC power supply 3 and resistors 40 and 50 connected in series with each other are connected in parallel with the Triac 2. The alternating voltage $v$ across the resistor 50 is detected and, if it is practically zero, the Triac 2 is judged to be on or conducting.

- 1 -

However, when the applied voltage is zero, the circuit will detect zero voltage, thus indicating as if the Triac is on even although it is actually off. Another disadvantage of this circuit is that the resistances for the resistors 40, 50 have to be selected suitably according to the voltage applied. A further problem is that as the applied voltage increases, the electronic parts or devices used in the detection circuit have to have a larger withstand voltage and, therefore, become expensive. A still further problem is that when the current through the Triac 2 is large, the voltage between terminals $T_1$, $T_2$ will be so high that the circuit will indicate as if the Triac is on.

An object of the present invention is to provide a circuit for the above-mentioned purpose which obviates such shortcomings.

In accordance with the present invention, a reliable detection of the turning-on of an AC switch is possible by detecting the voltage across the control terminals of the AC switch, and the firing detection circuit is not affected by the voltage applied to or the current through the AC switch.

According to the present invention there is provided a circuit for preventing two or more AC switches from conducting simultaneously, said circuit comprising for each of said AC switches a control circuit for giving its respective AC switch a control signal to turn it on, and a detection circuit for detecting the voltage across the control terminals of

- 2 -

said respective AC switch to detect that it is on, said control circuit being provided with a circuit for cancelling the control signals for the other AC switches when one of said detection circuits has detected that the respective AC switch is on.

Other objects and features of the present invention will become apparent from the following description taken with reference to the accompanying drawings, in which:

Fig. 1 is a circuit diagram showing a conventional circuit;

Fig. 2 is a circuit diagram showing the working principle of the circuit according to the present invention; and

Fig. 3 is a circuit diagram of an embodiment of the present invention.

Referring to Fig. 2, a load 1 and a Triac 2 as an AC switch are connected in series with an AC power supply 3.

Across a terminal $T_1$ and a gate G of the Triac 2, a firing circuit 4 for giving it a gate voltage is connected. The firing circuit has a transistor 6 and resistors 5, 7, 8 and 9. The transistor receives a firing command signal through the resistor 5. When a firing command signal is given to its base B, the transistor 6 will turn on and a voltage appear

across the terminal $T_1$ and the gate G. Thus the Triac 2 will turn on.

Also, a firing detection circuit 10 for detecting the gate voltage is connected across the terminal $T_1$ and the

gate G of the Triac 2. The firing detection circuit 10 includes a comparison circuit 11 for comparing the gate voltage with a reference voltage. When the gate voltage is higher than the reference voltage, the comparison circuit 11 gives a high-level signal, indicating that the Triac 2 is on. The firing detection circuit 10 generates a high-level signal while the gate voltage is being applied by the firing circuit 4 to between the terminal $T_1$ and the gate G of the Triac 2. Even while no gate voltage is being applied, it generates a high-level signal if the Triac is on, because then there is a voltage between the gate G and the terminal $T_1$. The reference voltage for the firing detection circuit 10 is set to a much smaller value than the gate voltage when the Triac 2 is on.

As described above, it can be known by means of a signal synchronized with the load current (or generated on zero crossing of the load current) whether the AC switch is on or off, by detecting the voltage across its control terminals.

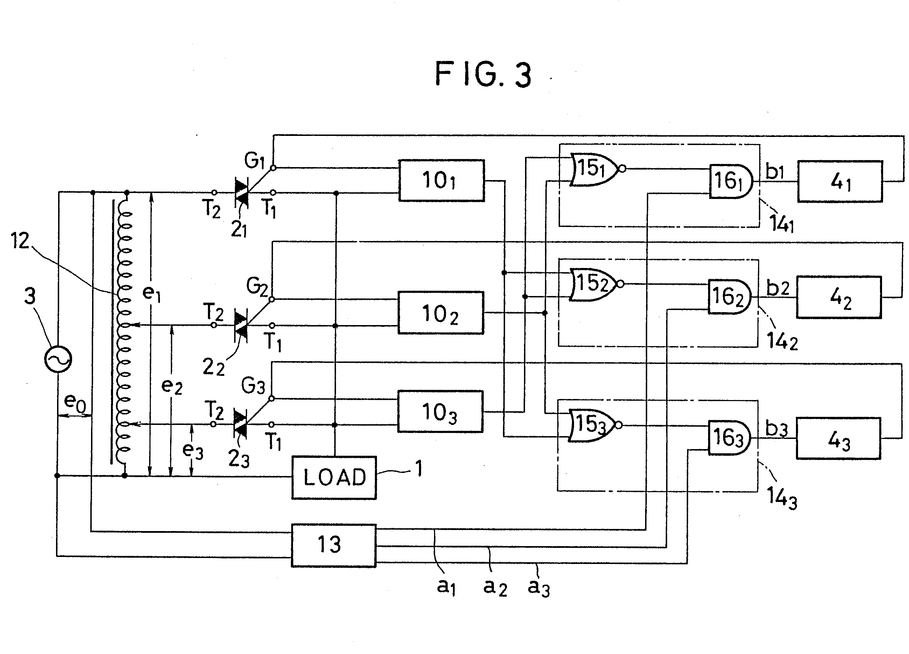

Fig. 3 shows a preferred embodiment in which two or more AC switches are prevented from conducting simultaneously.

A voltage $e_0$ is divided by a transformer 12 into voltages $e_1$, $e_2$ and $e_3$, which are applied to the load 1 through Triacs $2_1$, $2_2$ and $2_3$. These Triacs are connected to firing circuits $4_1$, $4_2$ and $4_3$ and firing detection circuit $10_1$, $10_2$ and $10_3$, respectively. The gates $G_1$, $G_2$ and $G_3$ of the Triacs $2_1$,

$2_2$ and $2_3$ are adapted to be controlled by the firing circuits $4_1$, $4_2$ and $4_3$, respectively. To the AC power supply 3 is connected a voltage synchronizing circuit 13 for generating firing signals $a_1$, $a_2$ and $a_3$ synchronized with the source voltage $e_0$.

The firing circuit $4_n$ (n is an integer) is controlled by its respective firing command signal generating circuit $14_n$ which generates a firing command signal $b_n$ when other firing detection circuits than the corresponding firing detection circuit $10_n$ give a low-level signal (indicating that the respective Triacs are not conducting) and the voltage synchronizing circuit 13 gives a firing signal $a_n$. In response to the firing command signal $b_n$, the firing circuit $4_n$ will apply a gate voltage across the gate $G_n$ of the Triac $2_n$ to turn it on. The firing command signal generating circuit $14_n$ includes a NOR gate $15_n$ which receives a signal from the firing detection circuits other than the firing detection circuit $10_n$, and an AND gate $16_n$ which receives the signal from the NOR gate $15_n$ and a firing single $a_n$ from the voltage synchronizing circuit 13.

In accordance with the present invention, since the voltage across the control terminals of the AC switch is detected, it can be detected whether the AC switch is on or off, even if the load contains a reactor or capacitor component. Two AC switches can be prevented from conducting

- 5 -

by turning one AC switch only after detecting that the other AC switch has turned off. Since the voltage across the control terminals of the AC switch is always a few volts, the same one firing detection circuit can be used regardless of the voltage applied to the AC switch.

What are claimed are:

1.      A circuit for preventing two or more AC switches from conducting simultaneously, said circuit comprising for each of said AC switches a control circuit for giving its respective AC switch a control signal to turn it on, and a detection circuit for detecting the voltage across the control terminals of said respective AC switch to detect that it is on, said control circuit being provided with a circuit for cancelling the control signals for the other AC switches when one of said detection circuits has detected that the respective AC switch is on.

2.      The circuit as claimed in claim 1 wherein said AC switch is a reverse blocking triode thyristor or a bidirectional triode thyristor.

1/2

# FIG.1
## PRIOR ART

# FIG.2

0120103

FIG. 3

$4_1$ $4_2$ $4_3$

$b_1$ $14_1$ $16_1$ $15_1$ $10_1$

$b_2$ $14_2$ $16_2$ $15_2$ $10_2$

$b_3$ $14_3$ $16_3$ $15_3$ $10_3$

LOAD  1

13

$a_1$ $a_2$ $a_3$

$G_1$ $T_1$ $2_1$ $T_2$

$G_2$ $T_1$ $T_2$ $2_2$

$G_3$ $T_1$ $T_2$ $2_3$

$e_1$ $e_2$ $e_3$

$e_0$

12  3

European Patent
Office

**EUROPEAN SEARCH REPORT**

0120103
Application number

EP 83 10 2882

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | US-A-3 478 257 (L. KYR et al.) <br> * Figure 1, elements 31, 77, 78, 48, 63; abstract; column 5, lines 3-68; figures 2, 7; column 7, line 36 - column 8, line 4 * | 1,2 | H 02 H 11/00 <br> H 01 F 29/04 <br> H 03 K 17/18 |
| | --- | | |
| Y | DE-A-2 031 641 (WANDEL & GOLTERMANN) <br> * Figure 3, elements 44-49, 35-37; page 2, lines 15-30; page 8, line 26 - page 10, line 7 * | 1 | |
| A | * Claim 5 * | 2 | |
| | --- | | |
| A | DE-B-2 457 807 (SIEMENS AG) <br> * Figure, element 15 * | 1,2 | |
| | --- | | **TECHNICAL FIELDS SEARCHED (Int. Cl. ³)** |
| A | DE-B-1 563 280 (MASCHINENFABRIK REINHAUSEN GEBR. SCHEUBECK KG) | | |
| | --- | | G 05 F 1/14 <br> G 05 F 1/16 <br> G 05 F 1/20 |
| A | US-A-4 024 454 (A. EKSTROM et al.) | | H 01 F 29/02 <br> H 01 F 29/04 <br> H 02 H 7/04 |
| | --- | | H 02 F 7/055 <br> H 02 H 7/122 |
| A | US-A-4 298 810 (E.H. DINGER et al.) | | H 02 H 11/00 <br> H 02 M 1/08 <br> H 02 M 1/18 <br> H 02 P 13/06 <br> H 03 K 17/18 <br> H 03 K 17/725 |
| | ----- | | |

The present search report has been drawn up for all claims

| Place of search <br> BERLIN | Date of completion of the search <br> 15-11-1983 | Examiner <br> ARENDT M |
|---|---|---|